# EUROPEAN PATENT APPLICATION

(11) **EP 4 455 377 A1**
(43) Date of publication of application: **30.10.2024**
(21) Application number: 22911398.0
(22) Date of filing: 23.12.2022
(51) Int. Cl.: D01F 2/10, D01D 5/06

(54) **RECYCLED CELLULOSE FIBERS, METHOD FOR PRODUCING SAME, AND FIBER STRUCTURE OF SAME**

(30) Priority: 24.12.2021 JP 2021210846
(71) Applicant: Pharma Foods International Co., Ltd., Kyoto 615-8245 (JP)
(72) Inventor: SHINODA, Katsumi, Kyoto-shi, Kyoto 615-8245 (JP); KOGA, Keita, Kyoto-shi, Kyoto 615-8245 (JP); KIM, Mujo, Kyoto-shi, Kyoto 615-8245 (JP); SHIRATORI, Takeshi, Masuda-shi, Shimane 698-0036 (JP)
(74) Representative: Uexküll & Stolberg
(86) International application number: PCT/JP2022/047585
(87) International publication number: WO 2023/120697

(57) **Abstract**

The present invention provides highly safe functional fibers by imparting a novel function to recycled cellulose fibers.

The present invention provides recycled cellulose fibers which contain an eggshell membrane hydrolysate. The recycled cellulose fibers according to the present invention may contain about 0.5 part by mass to about 25 parts by mass of the eggshell membrane hydrolysate per about 100 parts by mass of cellulose.

## Description

### TECHNICAL FIELD

The present invention relates to a regenerated cellulose fiber including an eggshell membrane hydrolysate, and particularly relates to a regenerated cellulose fiber including an eggshell membrane component obtained by applying an eggshell membrane hydrolysate to a process for producing a regenerated cellulose fiber, and the production method thereof.

### BACKGROUND ART

The eggshell membrane is a thin skin inside an eggshell. It has been known for a long time that the eggshell membrane is effective as a cosmetic, a wound-covering material, and the like, making use of its characteristics such as cell production action of its amino acid, adhesion to tissues by its network structure, and moderate moisture retention property and air permeability of the eggshell membrane. However, the eggshell membrane is insoluble in most solvents including water, and it is difficult to mold the eggshell membrane into a fibrous form. Therefore, the eggshell membrane is subjected to hydrolysis treatment to be solubilized, and used as a water-soluble eggshell membrane component.

By the way, in the production of regenerated cellulose fibers using cellulose derived from wood or non-wood as a raw material, various attempts have been made to impart new properties. Methods for imparting a novel function to a regenerated cellulose fiber are roughly classified into: those performed in processes before the spinning stage; and those performed to yarn or cloth after the spinning, so-called post-processing. As typical practical examples of the latter, cloth is subjected to weak silket processing, resin processing, or the like for the purpose of dimensional stability. However, for other functionalities, there are still problems generally in durability and processing cost. On the other hand, the former method is relatively inexpensive and suitable for mass production.

First, examples of the former includes, as a method for including fine particles of binchou charcoal or chitosan for the purpose of imparting a deodorizing function and an antibacterial function, a so-called kneading method in which the particles are dispersed for spinning in a spinning dope such as viscose, which is obtained by: converting cellulose into alkali cellulose; then reacting the alkali cellulose with carbon disulfide to obtain cellulose xanthate; and dissolving the cellulose xanthate. In the kneading method, the added particles are limited in particle size in order to prevent yarn breakage and clogging of the spinning port. At the same time, the particles are required to be stable in the components of the spinning dope and cause no abnormality in function and shape.

### SUMMARY OF THE INVENTION

### SOLUTIONS TO THE PROBLEMS

The present inventors have found that functional fibers can be obtained by using a hydrolyzed eggshell membrane, which is highly safe and has biocompatibility (skin protective property) in order to impart a novel function to regenerated cellulose fibers. Therefore, the present invention provides a regenerated cellulose fiber including a hydrolyzed eggshell membrane.

Therefore, according to a main aspect of the present invention, the following inventions are provided.

### (Item 1)

A regenerated cellulose fiber including an eggshell membrane hydrolysate.

### (Item 2)

The fiber according to the item, wherein the regenerated cellulose comprises a viscose rayon.

### (Item 3)

The fiber according to any one of the items, wherein the fiber includes the eggshell membrane hydrolysate in an amount of about 0.5 parts by mass or more and about 25 parts by mass or less with respect to about 100 parts by mass of cellulose.

### (Item 4)

The fiber according to any one of the items, wherein the eggshell membrane hydrolysate has a weight average molecular weight of about 10,000 to about 100,000.

### (Item 5)

A method for producing a regenerated cellulose fiber including a hydrolyzed eggshell membrane, the method including: subjecting an eggshell membrane to hydrolysis; stopping the hydrolysis to obtain a solution containing an eggshell membrane hydrolysate; mixing a spinning dope containing cellulose with the solution containing an eggshell membrane hydrolysate to obtain a spinning dope containing an eggshell membrane hydrolysate; and coagulating and regenerating cellulose from the spinning dope containing an eggshell membrane hydrolysate to produce a regenerated cellulose fiber.

### (Item 6)

The method according to the item, wherein the eggshell membrane is subjected to hydrolysis in a presence of alkali.

### (Item 7)

The method according to any one of the items, wherein the hydrolysis is performed in an alkali solution having an alkali concentration of about 0.1 to about 10% (w/w).

### (Item 8)

The method according to any one of the items, wherein the hydrolysis is stopped by a reaction with carbon disulfide and/or neutralization with an organic carboxylic acid.

### (Item 9)

The method according to any one of the items, wherein the hydrolysis is stopped with the organic carboxylic acid in an equivalent of about 0.5 to about 1.0 with respect to alkali used in hydrolysis.

### (Item 10)

The method according to any one of the items, wherein the organic carboxylic acid is citric acid.

### (Item 11)

A fiber produced by the method according to any one of the items.

### (Item 12)

A fiber structure including: the fiber according to any one of the items; or a fiber produced by the method according to any one of the items.

In the present disclosure, it is intended that the one or more features described above may be provided in further combination in addition to the specified combination. It should be noted that further embodiments and advantages of the present disclosure will be appreciated by those skilled in the art upon reading and understanding the following detailed description as necessary.

Note that features and remarkable operations and effects of the present disclosure other than those described above will be apparent to those skilled in the art with reference to the following embodiments and drawings of the invention.

### ADVANTAGES OF THE INVENTION

The regenerated cellulose fiber of the present invention contains an eggshell membrane hydrolysate having a molecular weight at which the characteristics of eggshell membrane are exhibited and having a high cystine content.

Further, in the regenerated cellulose fiber of the present invention, conventional production processes for a regenerated cellulose fiber can be applied as they are. Therefore, there is no need to use special production facilities to produce the regenerated cellulose fiber containing an eggshell membrane component, and the regenerated cellulose fiber can be produced in existing facilities.

The regenerated cellulose fiber of the present invention and the fiber structure thereof also have the characteristics of eggshell membrane in addition to the original characteristics of regenerated cellulose fiber, and thus have functionalities such as moisture absorption and release properties, deodorizing properties, and antibacterial properties.

Furthermore, the regenerated cellulose fiber of the present invention is not limited in the shape and area of its fiber structure, and therefore, can also solve the disadvantage of natural eggshell membranes that a natural eggshell membrane can be collected only in the area of its egg size and also has no planar shape.

### BRIEF DESCRIPTION OF THE DRAWINGS

Fig. 1 is a photograph showing a fiber kneaded with an eggshell membrane component according to an embodiment of the present invention.
Fig. 2 is a photograph showing a fiber in which an eggshell membrane component is not kneaded (regular fiber).

### MODE FOR CARRYING OUT THE INVENTION

Hereinafter, the present disclosure will be described while showing the best mode. It is to be understood that throughout the specification, a singular form expression also includes the concept of the plural forms thereof, unless otherwise stated. Thus, it is to be understood that the singular form article (For example, in English, "a", "an", "the", and the like are used.) also includes the concept of the plural forms thereof unless otherwise stated. It is also to be understood that the terms used in the specification are used in a sense commonly used in the art unless otherwise noted. Thus, unless defined otherwise, all technical and scientific terms used in the specification have the same meaning as commonly understood by one of ordinary skill in the art to which this disclosure belongs. In case of conflict, the specification (including definitions) will control.

Hereinafter, definitions and/or basic technical contents of terms particularly used in the specification will be described as appropriate.

As used in the specification, "about" means ± 10% of the subsequent numerical value.

In the specification, the term "regenerated cellulose fiber" refers to a fiber obtained by: solubilizing wood or non-wood-derived natural cellulose, a raw material, through dissolving in a special solvent, a reaction with a complexing agent, or forming a chemically modified derivative; dissolving the cellulose to obtain a spinning dope; and spinning in a spinning bath to regenerate a fibrous cellulose.

In the specification, examples of the regenerated cellulose fiber include a rayon obtained by a viscose method (also referred to as viscose rayon), a polynosic, a cupra obtained by a cuprammonium method, and a solvent-spun cellulose obtained by a solvent spinning method (also referred to as lyocell).

In the specification, the terms "molecular weight" or "average molecular weight" refer to a weight average molecular weight (Mw) in terms of polyethylene oxide (PEO) measured by gel permeation chromatography (GPC method) after dissolving an eggshell membrane hydrolysate in a solvent.

### (Preferred embodiment)

Preferred embodiments of the present disclosure will be described below. The embodiments below are provided for a better understanding of the present disclosure, and the scope of the present disclosure should not be limited to the following description. Therefore, it is apparent that those skilled in the art can appropriately make modifications within the scope of the present disclosure in view of the description in the specification. In addition, the following embodiments of the present disclosure can be used alone or in combination thereof.

According to an aspect of the present invention, provided is a regenerated cellulose fiber including an eggshell membrane hydrolysate.

### [Eggshell Membrane]

The origin of the eggshell membrane as a material of the regenerated cellulose fiber of the present invention is not particularly limited. For example, as the eggshell membrane, an eggshell membrane of poultry birds such as a chicken, a quail, a turkey, a wild duck, a domestic duck, a domestic goose, an ostrich, a guinea fowl, a long-tailed cock, a bantam, a pigeon, a mute swan, an emu, or a pheasant can be used. In an embodiment of the present invention, chickens are preferable in that they are easily available, are produced abundantly as egg-laying species, and have large eggs and an established mass breeding method.

Usually, the eggshell membrane has eggshell adheres thereon. When the eggshell membrane is hydrolyzed as it is, the eggshell undesirably remains insoluble, clogs the spinneret during wet spinning, and breaks the spinneret. In order to remove the eggshell, the eggshell membrane having eggshell may be immersed in an aqueous solution of hydrochloric acid, phosphoric acid, or the like, so that the eggshell is dissolved in water, filtered, and washed with water to be previously removed. Alternatively, the eggshell membrane still having eggshell may be hydrolyzed to be soluble in a solvent, followed by physically removing the eggshell insoluble in the solvent by filtration, centrifugation, or the like.

### [Pulverization of Eggshell Membrane]

In an embodiment of the present invention, the eggshell membrane is preferably pulverized in advance to smoothly hydrolyze the eggshell membrane. The size of the pulverized eggshell membrane is not particularly limited as long as the eggshell membrane is so pulverized that hydrolysis is smoothly performed. In an embodiment, the pulverized eggshell membrane has a diameter of preferably about 0.1 um or more and about 5 mm or less, and more preferably about 1 um or more and about 1 mm or less. Within this range, the eggshell membrane can be uniformly hydrolyzed when the eggshell membrane is hydrolyzed. It is not preferable that the eggshell membrane has a diameter of about less than 0.1 um because there are difficulties in production and the hydrolyzed eggshell membrane component has an excessively low molecular weight.

### [Hydrolysis of Eggshell Membrane]

The eggshell membrane in the present invention can be hydrolyzed and subjected to fiber production.

Regarding hydrolysis of an eggshell membrane, it is known that a solubilized eggshell membrane having a relatively large molecular weight is obtained through hydrolysis in the presence of an alkali at a high temperature (JP-B2-6288686). However, in the hydrolysis in the presence of alkali described in this document, a neutralization step with an acidic substance is required to stop the decomposition reaction, and there is a problem that the cystine content, which is a feature of eggshell membranes, decreases in the neutralization step.

In addition, an eggshell membrane hydrolysate having a high cystine content can also be obtained by acting a proteolytic enzyme having an optimum pH in the alkaline region (JP-A-2018-177713). However, in the hydrolysis by the enzyme, a solubilized eggshell membrane protein having a large molecular weight of about 5000 or more is hardly obtained, and the proteolytic enzyme itself as a catalyst is expensive, so that the production cost increases.

Further, an eggshell membrane can be dissolved in thiopropionic acid or the like and spun by an electrospinning method to provide a fiber assembly (JP-A-2009-89859, JP-B2-5166953). However, in the fiber production methods described in these documents, not only special facilities are required, but also the fiber assembly uses the eggshell membrane component itself as the fiber and therefore does not have a natural eggshell membrane structure and is still insufficient in the application to wound-covering materials.

In addition, a method in which an eggshell membrane is hydrolyzed in the presence of a reducing agent and the solubilized eggshell membrane is processed into a fiber cloth has also been proposed (JP-B2-4387806, JP-A-2004-84154). However, the films and sheets described in these documents, in which a water-soluble eggshell membrane is immobilized on the fiber cloth with a crosslinking agent, a resin, or the like, do not always satisfy the requirements for textile products, such as durability, washing resistance, and touch feeling, and are not sufficiently applied to textile products.

Therefore, in the hydrolysis treatment for the eggshell membrane in the present invention, the eggshell membrane is hydrolyzed so as to achieve the regenerated cellulose fiber of the present invention. The hydrolysis treatment for the eggshell membrane in the present invention can be performed so that the obtained hydrolysate has a weight average molecular weight (Mw) of about 10,000 to about 100,000, preferably about 15,000 to about 80,000, and more preferably about 30,000 to about 60,000 by GPC (gel permeation chromatography). Preferably, the hydrolysis treatment for the eggshell membrane in the present invention may be performed so that the obtained hydrolysate contains cystine and cysteine in an amount of about 5% or more, about 8% or more, about 10% or more, about 12% or more, or about 15% or more, or about 30% or less, about 25% or less, about 20% or less, about 15% or less, about 10% or less, or about 8% or less in the eggshell membrane components. For example, the hydrolysis treatment for the eggshell membrane can be performed with an acid (hydrochloric acid, sulfuric acid, etc.), an alkali (sodium hydroxide, potassium hydroxide, etc.), a proteolytic enzyme (enzymes of microbial origin, enzymes of plant origin, enzymes of animal origin), or the like, but is preferably performed with an alkali, and is more preferably performed in an alkaline aqueous solution. The hydrolyzed eggshell membrane as a material of the regenerated cellulose fiber of the present invention may be a hydrolysate obtained using sodium hydroxide, and an aqueous solution of an alkali metal such as lithium hydroxide or potassium hydroxide or an alkaline earth metal such as calcium hydroxide can also be used. Since the peptide bond constituting a protein is an extremely stable bond and is non-enzymatically decomposed using an alkali, the peptide bond can also be decomposed under heating at high temperature at a high pH. When a relatively weak alkali is used, the eggshell membrane can be treated at a high temperature for a long time.

In other embodiments, the eggshell membrane can also be hydrolyzed using proteolytic enzymes such as pepsin, trypsin, renin, papain, caspase, chymotrypsin, protease, and peptidase, or acids such as citric acid, hydrochloric acid, and sulfuric acid.

In an embodiment of the present invention, for hydrolysis with an alkali such as sodium hydroxide, the eggshell membrane is prepared as a raw material, and an alkali is added to the eggshell membrane and stirred. The stirring conditions at this time may be any conditions as long as the raw materials and the alkali are sufficiently stirred, and the alkali hydrolyzes the peptide bond in the raw material to appropriately obtain the hydrolyzed eggshell membrane of the present invention.

In an embodiment, the alkali concentration is preferably about 0.1 to about 20%, more preferably about 0.5 to about 10% when the eggshell membrane is treated with alkali. When the alkali concentration is about less than 0.1%, a sufficient hydrolysate cannot be obtained, which is not preferable. When the alkali concentration is about 20% or more, the hydrolysis rate is too high to control the hydrolysis degree, which is not preferable.

In addition, in an embodiment of the present invention, the temperature for hydrolysis is preferably about 10 to about 90°C, and more preferably about 40 to about 80°C. When the temperature is about lower than 10°C, hydrolysis hardly proceeds, which is not preferable. When the temperature is about 90°C or higher, it is difficult to control the hydrolysis degree, which is not preferable.

In an embodiment, the reaction time in treating the eggshell membrane with an alkali can be appropriately changed depending on the reaction temperature, the alkali concentration, the target molecular weight, or the like, and is not particularly limited as long as it is a time during which the eggshell membrane is appropriately hydrolyzed. For example, in an embodiment, the reaction time can be from about 30 minutes to about 6 hours, preferably from about 1 hour to about 4 hours.

In an embodiment of the present invention, the solvent required for hydrolysis is preferably water, but a water-soluble organic solvent such as methanol, ethanol, acetone, n-propanol, or isopropanol may be used in combination. Hydrolysis with an aqueous solvent is preferable from the viewpoint of working environment and wastewater treatment.

### [Stop of Hydrolysis Step]

The hydrolysis reaction in the present invention is preferably stopped at the timing when the obtained hydrolysate has a weight average molecular weight (Mw) of about 10,000 to about 100,000, preferably about 15,000 to about 80,000, and more preferably about 30,000 to about 60,000. The hydrolysis reaction can be accomplished by any means in the art. In a preferred embodiment, the following two methods are exemplified to stop the hydrolysis of the eggshell membrane, and either step may be used.

(1) The eggshell membrane is hydrolyzed in the presence of alkali, and then carbon disulfide is added to stop the hydrolysis

After the hydrolysis reaction is completed, the reaction mixture is cooled to about 30°C, and carbon disulfide is added to stop the hydrolysis in the presence of alkali. After the hydrolysis is completed, rapid cooling can be performed to stop the hydrolysis, and a cryogen such as ice can also be introduced into the system.

In order to completely stop the hydrolysis even in the presence of alkali, it is effective that about 0.2 to about 50% of carbon disulfide is reacted with respect to the weight of the charged eggshell membrane to form a complex of an amino group (-NH-) and carbon disulfide (CS₂). About 1 to about 40% of carbon disulfide is more preferably reacted, and about 2 to about 30% of carbon disulfide is particularly preferably reacted. When carbon disulfide is about 0.2% or less, the alkali hydrolysis is insufficiently stopped. When carbon disulfide is more than about 50%, excessive carbon disulfide is separated, which is a problem in production safety.

### (2) The eggshell membrane is hydrolyzed in the presence of alkali and then neutralized with acid

After the hydrolysis reaction, the mixture is rapidly cooled to about 50°C, and an acid is immediately added in an equivalent of about 0.5 to about 1.0 with respect to the alkali agent used in the alkali hydrolysis to stop the hydrolysis. The added acid may be a strong acid or a weak acid. For a strong acid such as hydrochloric acid or sulfuric acid, a hydrolyzed eggshell membrane is precipitated when the acid is added in an equivalent of about 0.5, and further sulfur odor is severely generated and cystine and/or cysteine fall off. Therefore, a weak acid is preferable. In an embodiment, examples of the weak acid include an acid having an acid dissociation constant (pKa) in water of 0 or more, preferably about 0.2 or more, further preferably about 1.0 or more, further preferably about 1.5 or more, further preferably about 2.0 or more, and further preferably about 3.0 or more, and the upper limit is not particularly set. Examples thereof include: acetic acid: pKa = 4.6, carbonic acid: pKa = 6.4, oxalic acid: pKa = 1.0, citric acid: pKa = 3.1, and benzoic acid: pKa = 4.0.

The organic carboxylic acid used in the present invention is not particularly limited, but is preferably a weak acid such as citric acid since no hydrolyzed eggshell membrane is precipitated as an insoluble substance before the amount of equivalent neutralization. The amount of the organic carboxylic acid used for neutralization is from about 0.5 to about 1.0 equivalent, more preferably from about 0.6 to about 0.8 equivalents, with respect to the used alkali agent. When the amount is about 0.5 equivalents or less, hydrolysis proceeds with time, which is not preferable. When the amount is about 1.0 equivalent or more, a hydrolyzed eggshell membrane component is precipitated, which is not preferable.

In neutralization with the organic carboxylic acid, the next spinning step may be performed in a state where some alkali agent remains. However, it is preferable to treat with an alkali adsorbent (for example, "KYOWAAD 700", manufactured by Kyowa Chemical Industry Co., Ltd.), and then remove the adsorbent by filtration. In this way, the presence of the alkaline agent is almost eliminated, and an eggshell membrane hydrolysate that is stable over time is obtained, which is preferable.

In an embodiment, the organic carboxylic acid is not particularly limited as long as it can neutralize the hydrolysis, but examples thereof preferably include weak acids such as citric acid, acetic acid, carbonic acid, or oxalic acid, and particularly citric acid is preferable in that it is used in applications such as fibers and cosmetics.

In an embodiment, regarding stopping the hydrolysis with carbon disulfide or neutralizing the hydrolysis with the organic carboxylic acid such as citric acid as described above, only one may be performed, or both may be performed in combination to stop or neutralize the hydrolysis.

The molecular weight of the eggshell membrane hydrolysate obtained as described above is about 10,000 to about 100,000, preferably about 15,000 to about 80,000, and more preferably about 30,000 to about 60,000 in terms of weight average molecular weight (Mw) by GPC (gel permeation chromatography).

When the molecular weight is about less than 10,000, the solubility in water increases and the residual ratio decreases in spinning into a rayon fiber, which is not preferable. When the molecular weight exceeds about 100,000, the compatibility with viscose deteriorates and the residual ratio in spinning deteriorates, which is not preferable.

In an embodiment of the present invention, the eggshell membrane hydrolysate of the present invention can maintain its molecular weight within about 30%, within about 20%, preferably within about 15%, more preferably within about 10%, and even more preferably within about 5% when allowed to stand at room temperature to about 40°C for at least about 3 days, at least about 5 days, or at least about 7 days.

### [Regenerated Cellulose Fiber]

The regenerated cellulose fiber refers to a fiber obtained by: solubilizing wood or non-wood-derived natural cellulose, a raw material, through dissolving in a special solvent, a reaction with a complexing agent, or forming a chemically modified derivative; dissolving the cellulose to obtain a spinning dope; and spinning in a spinning bath to regenerate a fibrous cellulose. The regenerated cellulose fiber has been popularly used for a long time as an artificial fiber having properties close to those of natural fibers, such as excellent hygroscopic property. The regenerated cellulose fiber is a fiber close to cotton, and a substitute for natural fibers. Also, various attempts have been made to impart further new properties to the fibers.

As a method for introducing a functional component into a viscose, it has been proposed to knead a cationic substance such as a quaternary ammonium compound (JP-A-52-91913), casein (Cisalpha, Lacisana), soybean, albumin, fibroin (JP-B-38-18563), a wool solution (JP-A-09-241920), or the like. However, these methods have problems in compatibility with viscose, have manufacturing defects in spinning. Therefore, these methods are poor in marketability, and almost none of them are currently commercially available.

According to JP-B-38-18563, a strong alkaline solution (pH is 13 or higher) is used to disperse a protein, and the reaction is performed at a high temperature of 50°C or higher. Then, the reaction product is obtained as a viscous resin. Furthermore, the yield is expressed as the resin content, and the amount of protein remaining in the resin is unknown.

Therefore, the present invention provides: a fiber that is a regenerated cellulose fiber kneaded with an eggshell membrane component by a production method including only conventional production processes without requiring a special device, and exhibiting excellent functions as an eggshell membrane; and a production method thereof.

In an embodiment, the regenerated cellulose fiber of the present invention is a regenerated cellulose fiber including an eggshell membrane hydrolysate, and may include the eggshell membrane hydrolysate in an amount of about 0.5 parts by mass or more and about 25 parts by mass or less with respect to about 100 parts by mass of cellulose.

In an embodiment, the regenerated cellulose fiber of the present invention can be obtained by the following method: a method for producing a regenerated cellulose fiber including a hydrolyzed eggshell membrane, the method including: subjecting an eggshell membrane to hydrolysis; stopping the hydrolysis to obtain a solution containing an eggshell membrane hydrolysate; mixing a spinning dope containing cellulose with the solution containing an eggshell membrane hydrolysate to obtain a spinning dope containing an eggshell membrane hydrolysate; and coagulating and regenerating cellulose from the spinning dope containing an eggshell membrane hydrolysate to produce a regenerated cellulose fiber.

In an embodiment, examples of the method for producing a regenerated cellulose fiber of the present invention include: the cuprammonium process, in which cellulose is solubilized by forming a cuprammonium complex thereof to obtain a spinning dope, and the spinning dope is subjected to spinning; the viscose process, in which cellulose is made into alkali cellulose, and then reacted with carbon disulfide to obtain a soluble cellulose xanthate, and thus obtained spinning dope (viscose) is subjected to spinning; and the solvent spinning process, in which cellulose is dissolved into a special solvent to obtain a spinning dope, and the spinning dope is subjected to spinning. Among them, viscose rayon fibers obtained by the viscose process are particularly useful.

In an embodiment, the production method of the present invention may include: subjecting an eggshell membrane to hydrolysis in the presence of alkali; stopping the hydrolysis to obtain a solution containing an eggshell membrane hydrolysate; mixing a viscose dope containing cellulose with the solution containing an eggshell membrane hydrolysate to prepare a viscose solution; and extruding the viscose solution from a spinning nozzle into a spinning bath, and coagulating and regenerating cellulose to prepare a rayon.

In an embodiment, the viscose rayon fiber containing an eggshell membrane component that is produced in a viscose method can also be obtained, after the following steps.
(1) Step of hydrolyzing an eggshell membrane in the presence of alkali, and then adding carbon disulfide to stop the hydrolysis
(2) Step of hydrolyzing an eggshell membrane in the presence of alkali, and then neutralizing with an organic carboxylic acid to stop the hydrolysis
(3) Step of blending a spinning dope viscose with the eggshell membrane hydrolysate obtained after the steps (1) or (2) to obtain a viscose rayon fiber through a wet spinning method
(4) Step of processing the viscose rayon fiber obtained after the step (3) into staples

In an embodiment of the present invention, the fiber of the present invention has functionality, and the material thereof is preferably a natural material-derived fiber since the eggshell membrane is a natural material, and in particular, a viscose rayon fiber, which is a regenerated cellulose fiber, is preferable. In an embodiment, the viscose rayon fiber is produced by: converting natural cellulose derived from wood or non-wood into alkali cellulose and then reacting the alkali cellulose with carbon disulfide to obtain a cellulose xanthate; obtaining a viscose, a spinning dope that is a solution of the cellulose xanthate; and spinning the viscose to obtain a regenerated cellulose fiber.

### [Blending Eggshell Membrane Component and Viscose]

In an embodiment of the present invention, the eggshell membrane hydrolysate whose hydrolysis has been stopped with carbon disulfide can be blended with a viscose, which is an aqueous solution of a cellulose xanthate obtained by reacting alkali cellulose with carbon disulfide, at an arbitrary ratio at room temperature. In another embodiment, the eggshell membrane hydrolysate neutralized with an organic carboxylic acid can also be blended at room temperature in an arbitrary ratio. When the eggshell membrane hydrolysate is mixed with a viscose, the hydrolysis is stopped by carbon disulfide present in the viscose even in the presence of an alkali agent, so that the eggshell membrane hydrolysate can be stabilized.

### [Spinning with Kneaded Eggshell Membrane Component]

In an embodiment, the viscose to which the hydrolyzed eggshell membrane component has been added can be spun under known conditions using conventional equipment for spinning viscose rayon. In an embodiment, the raw material viscose may contain, for example, cellulose in an amount of about 7 mass% or more and about 10 mass% or less, sodium hydroxide in an amount of about 5 mass% or more and about 8 mass% or less, and carbon disulfide in an amount of about 2 mass% or more and about 3.5 mass% or less. In an embodiment, the temperature of the raw material viscose is preferably held at about 18°C or more and about 23°C or less.

In an embodiment, the addition amount of the eggshell membrane component to the viscose in the eggshell membrane hydrolysate is preferably about 0.5 mass% or more and about 25 mass% or less, more preferably about 1.0 mass% or more and about 20 mass% or less, and still more preferably about 2.0 mass% or more and about 15 mass% or less as the eggshell membrane component with respect to about 100 mass% of cellulose in the raw material viscose.

By spinning the eggshell membrane component-containing viscose prepared under the above conditions, the eggshell membrane component-containing viscose rayon fiber in which an eggshell membrane component is effectively contained inside the fiber without impairing the fiber strength can be obtained.

In an embodiment, the eggshell membrane component-containing viscose rayon fiber of the present invention can be spun using, for example, a conventional circular nozzle. As the spinning nozzle, it is preferable to use a circular nozzle having a diameter of 0.05 mm or more and 0.12 mm or less and the number of holes of 1000 or more and 20000 or less although depending on the target production amount. The viscose solution for spinning is extruded into a spinning bath to perform spinning using the spinning nozzle, and coagulated and regenerated. The spinning speed is preferably in a range of 30 m/min or more and 80 m/min or less. The stretching ratio is preferably 39% or more and 55% or less. Here, the stretching ratio indicates how much the sliver speed is increased after stretching when the sliver speed is 100 before stretching. The ratio is 1 before stretching, and 1.39 times or more and 1.55 times or less after stretching.

As the spinning bath (Muller bath), for example, a strongly acidic bath containing sulfuric acid at about 95 g/L or more and about 130 g/L or less, zinc sulfate at about 10 g/L or more and about 17 g/L or less, and sodium sulfate (mirabilite) at about 290 g/L or more and about 370 g/L or less is preferably used. The concentration of sulfuric acid is more preferably about 95 g/L or more and about 120 g/L or less.

### [Refining Rayon Fiber containing Eggshell Membrane Component]

In an embodiment, the regenerated cellulose fiber containing an eggshell membrane component obtained as described above is cut into a predetermined length and subjected to a conventional refining treatment. The refining step can be performed by a conventional method in the order of hot water treatment, hydrosulfuration treatment, bleaching, and pickling. The bleaching can be performed under the same conditions as those for conventional rayon fibers, and sodium hypochlorite or hydrogen peroxide may be used. In an embodiment, bleaching is preferably performed with sodium hypochlorite (hypochlorite of soda).

In an embodiment, the regenerated cellulose fiber of the present invention includes the eggshell membrane hydrolysate in an amount of about 0.5 parts by mass or more and about 25 parts by mass or less with respect to about 100 parts by mass of cellulose. The content is preferably about 1.0 parts by mass or more and about 20 parts by mass or less, and more preferably about 2.0 parts by mass or more and about 15 parts by mass or less. When the content of the eggshell membrane hydrolysate is about less than 0.5 parts by mass, the characteristics of the eggshell membrane cannot be sufficiently exhibited, and when the content is more than about 25 parts by mass, the fiber strength is significantly reduced.

In the regenerated cellulose fiber of the present invention, the molecular weight of the eggshell membrane hydrolysate is about 10,000 to about 100,000, preferably about 15,000 to 80,000, and more preferably about 30,000 to about 60,000 as measured by GPC. When the molecular weight is about less than 10,000, the solubility in water increases so that the residual ratio in spinning into a rayon fiber decreases, which is not preferable. When the molecular weight exceeds about 100,000, the spinnability tends to decrease, which is not preferable.

The regenerated cellulose fiber of the present invention is not particularly limited by its fineness. For example, the fineness is preferably in the range of 0.3 to 30 dtex. The fineness is more preferably in the range of 1 to 12 dtex. When the fineness is less than 0.3 dtex, the strength of the regenerated cellulose fiber may decrease, or productivity tends to decrease. When the fineness is more than 30 dtex, spinnability tends to be deteriorated due to poor regeneration.

The regenerated cellulose fiber of the present invention is not particularly limited by its fiber length. For example, when the fibers are cut and used, the fiber length is preferably 0.1 to 200 mm, and can be appropriately set and used according to the application and the like. Further, depending on the application, the regenerated cellulose fiber can be refined, and then used as long fiber bundles without cutting the fibers.

In an embodiment of the present invention, the fiber of the present invention or the fiber assembly thereof is formed of an eggshell membrane component derived from a natural component and a regenerated cellulose, and therefore, soft, excellent in adhesion to skin tissues of a human body, and not limited in the shape and area of the fiber assembly. Therefore, it is possible to eliminate the disadvantage of natural eggshell membranes that a natural eggshell membrane can be collected only in the area of its egg size and also has no planar shape, and to preferably use as an inner material or a cosmetic face mask.

In an embodiment of the present invention, the fiber of the present invention or the fiber assembly thereof can have substantially the same properties as a natural eggshell membrane because the fiber or the fiber assembly themselves contain an eggshell membrane component. Specifically, the eggshell membrane component itself contributes to fiber formation, and therefore properties unique to the eggshell membrane are strongly exhibited, unlike the case where the eggshell membrane component is simply formed into a film or the case where the eggshell membrane component is simply adhered to the surface of synthetic fibers or natural fibers. Therefore, when the fiber or the fiber assembly is applied to wound-covering materials, the network structure of natural eggshell membranes is imitated, and the cell production action of the amino acid, adhesion to tissues by the network structure, moderate moisture retaining property, air permeability, and sealing property by filter effect can be exhibited.

In an embodiment of the present invention, the fiber of the present invention or the fiber assembly thereof can impart physical properties that a natural eggshell membrane does not have (for example, high fiber strength) to the fiber assembly when the fiber is blended with a binder. Therefore, the present invention can be preferably applied as a wound-covering material superior to natural eggshell membranes.

### [Fiber Structure]

In an aspect of the present invention, there is provided a regenerated cellulose fiber containing a hydrolyzed eggshell membrane as described elsewhere in the specification, or a fiber structure containing a fiber obtained by a method for producing the same. In an embodiment, the fiber structure may include: a fiber bundle such as a spun yarn, a tow, and a filament; a fabric such as a woven fabric, a knitted fabric, a nonwoven fabric, paper, and a flocked fabric; a shaped product obtained by sewing the fabric; inner cotton (stuffing cotton); a molded product; and a liquid product, film, and shaped product that is mixed with and dispersed with a resin component such as PVA and polylactic acid.

The content of the fiber of the present invention in the fiber structure of the present invention may be any value as long as the effect of the fiber structure of the present invention is not impaired. For example, the content of the fiber of the present invention in the fiber structure of the present invention may be at least about 5 mass%, at least about 10 mass%, at least about 15 mass%, at least about 20 mass%, or at least about 30 mass% with respect to the total mass of the fiber structure.

In an embodiment of the present invention, the use ratio of the regenerated cellulose fiber of the present invention in the fiber structure of the present invention is not particularly limited. In order to favorably exhibit a desired effect, the use ratio is preferably about 10 mass% or more, more preferably 20 mass% or more, and still more preferably 30 mass% or more with respect to the total weight of the fiber structure.

In the specification, "or" is used when "at least one or more" of the items listed in the text can be employed. The same applies to "or". In the specification, the phrase "within a range" of "two values" means a range including the two values themselves.

References such as scientific literature, patents, patent applications, and the like cited in the specification are incorporated by reference in the specification in their entirety to the same extent as each is specifically described therein.

The present disclosure has been described above with reference to preferred embodiments for easy understanding. Hereinafter, the present disclosure will be described based on examples, but the above description and the following examples are provided only for the purpose of description and not for the purpose of limiting the present disclosure. Accordingly, the scope of the present disclosure is not limited to the embodiments or examples specifically described in the specification, but is limited only by the claims.

### EXAMPLES

### [Example 1: Production Example 1 of Eggshell Membrane Component-containing Fiber]

An eggshell membrane solution was prepared as follows to produce a fiber containing an eggshell membrane component.

### <Preparation of Eggshell Membrane Solution>

A washed chicken eggshell membrane (500 g) was added in a 5% caustic soda aqueous solution (3500 g), and stirred at 55 to 65°C for 3 hours for hydrolysis. Thereafter, the mixture was cooled to 30°C, 120 g of carbon disulfide was added thereto, and the mixture was reacted for 1 hour. Thereafter, the mixture was filtered through a filter cloth to obtain an eggshell membrane hydrolysis liquid (4000 g).

### <Measurement of Molecular Weight of Eggshell Membrane Hydrolysis Liquid>

The molecular weight of the obtained eggshell membrane hydrolysis liquid was measured under the following GPC conditions.
Apparatus: HLC-8320GPC (manufactured by Tosoh Corporation)
Mobile phase: 30% aqueous methanol solution (v/v)
   containing sodium acetate 0.5% (w (g)/v (mg))
Column: TSKgel G6000PWxl (manufactured by Tosoh Corporation)
   TSKgel G5000PWxl (manufactured by Tosoh Corporation)
   TSKgel G4000PWxl (manufactured by Tosoh Corporation)
Detector: RI & UV (210 nm)
Flow rate: 1 ml/min
Column temperature: 40°C
Sample concentration: 0.25% (w (g)/v (mg))
Injection volume: 50 ul
Standard substance for calibration curve: PEO

### <Production of Viscose Rayon Fiber>

### [Preparation of Spinning Dope]

The prepared hydrolyzed eggshell membrane liquid was added to a raw material viscose so that the amount of the eggshell membrane component was 10 parts by mass with respect to 100 parts by mass of cellulose, and the mixture was stirred and mixed.

As the raw material viscose, one containing 8.5 mass% of cellulose, 5.7 mass% of sodium hydroxide, and 2.7 mass% of carbon disulfide was used. The temperature was kept at 20°C.

### [Spinning Conditions]

The obtained spinning solution was spun at a spinning speed of 50 m/min and a stretching ratio of 43% by a two-bath tension spinning method to obtain a fiber having a fineness of 1.7 dtex. As the composition of the first bath (spinning bath), a Muller bath (50°C) containing 100 g/L of sulfuric acid, 15 g/L of zinc sulfate, and 350 g/L of sodium sulfate was used. As the spinneret for discharging the spinning solution, a nozzle having 4000 holes with a hole diameter of 0.06 mm was used.

### [Refining and Bleaching Treatment]

The viscose rayon thread obtained above was cut into a fiber length of 38 mm and subjected to refining treatment. The refining treatment was performed by hot water treatment and subsequent water washing, followed by hydrosulfuration treatment, bleaching (hypochlorite soda), and pickling in this order. After an oil agent was applied, the excess moisture and oil agent were removed with a compression roller, and then drying treatment (60°C, 7 h) was performed to obtain the rayon fiber of Example 1.

### [Example 2: Production Example 2 of Eggshell Membrane Component-containing Fiber]

An eggshell membrane solution was prepared as follows to produce a fiber containing an eggshell membrane component.

The charged amount is as shown in Table A below.

The fiber of Example 2 was obtained in the same manner as in Example 1 except that the hydrolyzed eggshell membrane liquid prepared by the above method was used.

### [Example 3: Production Example 3 of Eggshell Membrane Component-containing Fiber]

An eggshell membrane solution was prepared as follows to produce a fiber containing an eggshell membrane component.

The charged amount is as shown in Table A.

The fiber of Example 3 was obtained in the same manner as in Example 1 except that the hydrolyzed eggshell membrane liquid prepared by the above method was used.

### [Example 4: Production Example 4 of Eggshell Membrane Component-containing Fiber]

An eggshell membrane solution was prepared as follows to produce a fiber containing an eggshell membrane component.

### <Preparation of Eggshell Membrane Solution>

A washed chicken eggshell membrane (10 kg) was added in a 5% caustic soda aqueous solution (90 kg), and stirred at 55 to 65°C for 3 hours for hydrolysis treatment. Thereafter, the mixture was cooled to 50°C, and then an aqueous solution of citric acid in which 5 kg of citric acid was dissolved in 10 kg of water was added, and the resulting mixture was filtered through a filter cloth to obtain a hydrolyzed eggshell membrane liquid (120 kg).

### <Production of Rayon Fiber>

The fiber of Example 4 was obtained in the same manner as in Example 1 except that the hydrolyzed eggshell membrane liquid prepared by the above method was used.

### [Example 5: Production Example 5 of Eggshell Membrane Component-containing Fiber]

An eggshell membrane solution was prepared as follows to produce a fiber containing an eggshell membrane component.

### <Preparation of Eggshell Membrane Solution>

The charged amount is as shown in Table A.

### <Production of Rayon Fiber>

The fiber of Example 5 was obtained in the same manner as in Example 1 except that the hydrolyzed eggshell membrane liquid prepared by the above method was used.

### [Example 6: Production Example 6 of Eggshell Membrane Component-containing Fiber]

An eggshell membrane pulverized product was prepared as follows to produce a fiber containing an eggshell membrane component.

### <Preparation of Eggshell Membrane Pulverized Product>

The charged amount is as shown in Table A.

### <Production of Rayon Fiber>

The fiber of Example 6 was obtained in the same manner as in Example 1 except that the hydrolyzed eggshell membrane liquid prepared by the above method was used.

### [Comparative Example 1]

The fiber of Comparative Example 1 was obtained in the same manner as in Example 1 except for using a hydrolyzed eggshell membrane liquid that had been left for 3 days without being subjected to carbon disulfide treatment or organic acid neutralization treatment after the eggshell membrane was hydrolyzed.

### [Comparative Example 2]

The eggshell membrane was hydrolyzed in the same manner as in the operation of Example 2, and then carbon disulfide was added in an amount of 57% with respect to the eggshell membrane, followed by one-hour reaction. After the reaction, carbon disulfide was separated and retained at the bottom of the reactor. Accordingly, it was confirmed that carbon disulfide was excessive. Carbon disulfide was present in the hydrolyzed eggshell membrane liquid, and the safety in the spinning step could not be secured. Therefore, the fiberization was not performed.

### [Comparative Example 3]

The eggshell membrane was hydrolyzed in the same manner as in the operation of Example 6, and then neutralized with citric acid in an equivalent of 1.49 with respect to caustic soda used for hydrolysis. After neutralization, precipitation of a hydrolyzed eggshell membrane was observed, and it was confirmed that citric acid was excessive. Since insoluble matter was present in the hydrolyzed eggshell membrane liquid, there was a possibility that the spinneret was clogged during spinning, and spinning was not performed.

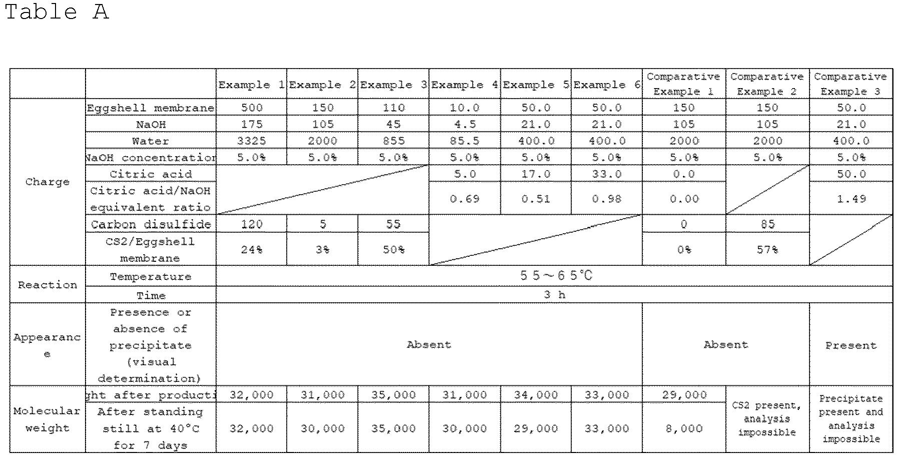

### [Results]

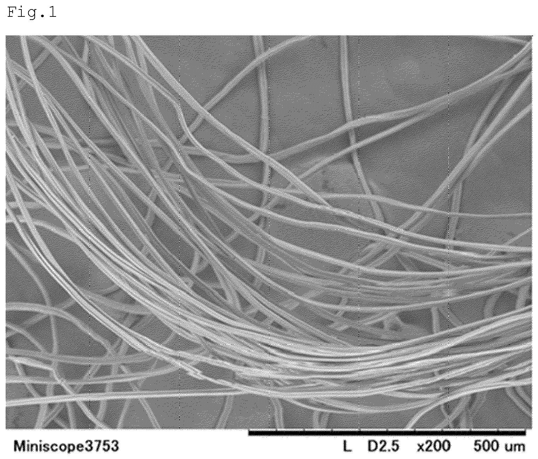

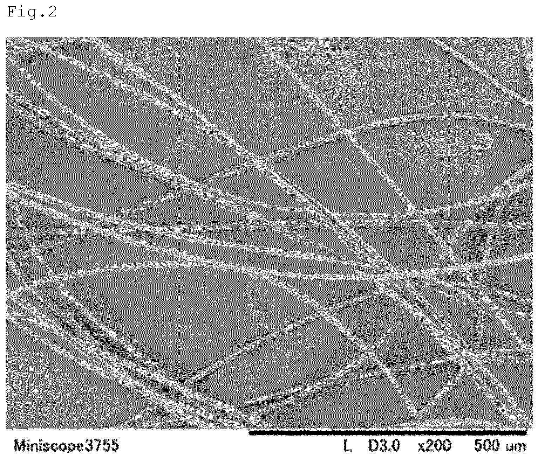

The content of the eggshell membrane component contained in the rayon obtained in Examples 1 to 6 and Comparative Example 1 was determined. The results are as shown in Table 1. As an example, Fig. 1 shows a photograph of a fiber kneaded with an eggshell membrane component, and Fig. 2 shows a photograph of a fiber in which an eggshell membrane component is not kneaded. As for the content of the eggshell membrane component, the nitrogen content was measured in accordance with the "Semi-Kjeldahl method" listed in the Japanese Pharmacopoeia, and multiplied by 6.55, the nitrogen conversion factor of the eggshell membrane, to determine the content of the eggshell membrane.

**[Table 1]**

| Content of Eggshell Membrane Component | | | | | | | | |
|---|---|---|---|---|---|---|---|---|
| Example 1 | Example 2 | Example 3 | Example 4 | Example 5 | Example 6 | Comparative Example 1 | Comparative Example 2 | Comparative Example 3 |
| 7.2% | 6.9% | 7.5% | 6.8% | 6.2% | 6.5% | 0.5% | Not performed | |

| | | | | | | | | |
|---|---|---|---|---|---|---|---|---|
| Note: The eggshell membrane component is blended in an amount of 10 parts by mass with respect to 100 parts by mass of cellulose. | | | | | | | | |

As can be seen from Table 1, in Comparative Example 1, the residual ratio in spinning into a rayon fiber was decreased. The decrease in the residual ratio of the eggshell membrane component is considered to be partially because of the decrease in the molecular weight (Mw). In Comparative Example 1, the molecular weight (Mw) was 29,000 right after production (Table A), but the molecular weight (Mw) was 8,000 after standing still at 40°C for 7 days. It is considered that since post-treatment such as neutralization is not performed, the molecular weight decreases relatively quickly (about one day), and is about 10,000 or less at the time of spinning.

### [Antibacterial Property Evaluation Results]

The results of the antibacterial property test of rayon in Examples 1 to 6 and Comparative Example 1 are as shown in Table 2. The antibacterial property test was performed in accordance with the bacterial liquid absorption method in the antibacterial property test for textile products (JIS L 1902: 2015), using Staphylococcus aureus as the test bacterium. The antibacterial property was evaluated by the antibacterial activity value, and those having an antibacterial activity value of 2.0 or more were described as "o", and those having an antibacterial activity value of less than 2.0 were described as "×".

**[Table 2]**

| Results of Antibacterial Property Test | | | | | | | | |
|---|---|---|---|---|---|---|---|---|
| Example 1 | Example 2 | Example 3 | Example 4 | Example 5 | Example 6 | Comparative Example 1 | Comparative Example 2 | Comparative Example 3 |
| ○ | ○ | ○ | ○ | ○ | ○ | × | Not performed | |

| | | | | | | | | |
|---|---|---|---|---|---|---|---|---|
| ∘: Antibacterial activity value 2.0 or more ×: Antibacterial activity value less than 2.0 Reference: In the antibacterial property test for textile products, an antibacterial activity value of 2.0 or more is evaluated as being antibacterially active. | | | | | | | | |

As can be seen from Table 2, the rayon fiber obtained in Examples 1 to 6 was found to have antibacterial properties, whereas the rayon fiber obtained in Comparative Example 1 was not found to have antibacterial properties.

### (Note)

Although the present disclosure has been described using preferred embodiments of the present disclosure as above, it is understood that the scope of the present disclosure should be interpreted only by the claims. It is understood that the patents, patent applications, and other documents cited in the specification are to be incorporated by reference in the specification as if their contents are specifically described in the specification. The present application claims priority to Japanese Patent Application No. 2021-210846 filed on December 24, 2021 in the Japan Patent Office, the contents of which are incorporated by reference as if the entire contents constitute the contents of the present application.

### INDUSTRIAL APPLICABILITY

Since the fiber of the present invention has a fiber structure of an eggshell membrane, the fiber can be used for an inner material, a face mask material, a wound-covering material, a wetting therapy material, a wound sheet, a bedsore sheet, a cosmetic sheet and pack, and the like.

## Claims

1. A regenerated cellulose fiber comprising an eggshell membrane hydrolysate.

2. The fiber according to claim 1, wherein the regenerated cellulose comprises a viscose rayon.

3. The fiber according to claim 1 or 2, wherein the fiber includes the eggshell membrane hydrolysate in an amount of about 0.5 parts by mass or more and about 25 parts by mass or less with respect to about 100 parts by mass of cellulose.

4. The fiber according to any one of claims 1 to 3, wherein the eggshell membrane hydrolysate has a weight average molecular weight of about 10,000 to about 100,000.

5. A method for producing a regenerated cellulose fiber including a hydrolyzed eggshell membrane, the method comprising:
subjecting an eggshell membrane to hydrolysis;
stopping the hydrolysis to obtain a solution containing an eggshell membrane hydrolysate;
mixing a spinning dope containing cellulose with the solution containing an eggshell membrane hydrolysate to obtain a spinning dope containing an eggshell membrane hydrolysate; and
coagulating and regenerating cellulose from the spinning dope containing an eggshell membrane hydrolysate to produce a regenerated cellulose fiber.

6. The method according to claim 5, wherein the eggshell membrane is subjected to hydrolysis in a presence of alkali.

7. The method according to claim 5 or 6, wherein the hydrolysis is performed in an alkali solution having an alkali concentration of about 0.1 to about 10% (w/w).

8. The method according to any one of claims 5 to 7, wherein the hydrolysis is stopped by a reaction with carbon disulfide and/or neutralization with an organic carboxylic acid.

9. The method according to claim 8, wherein the hydrolysis is stopped with the organic carboxylic acid in an equivalent of about 0.5 to about 1.0 with respect to alkali used in hydrolysis.

10. The method according to claim 8 or 9, wherein the organic carboxylic acid is citric acid.

11. A fiber produced by the method according to any one of claims 5 to 10.

12. A fiber structure comprising: the fiber according to any one of claims 1 to 4; or a fiber produced by the method according to any one of claims 5 to 10.
